(19) Europäisches Patentamt
European Patent Office
Office européen des brevets

(11) EP 1 500 684 B1

(12) EUROPEAN PATENT SPECIFICATION

(45) Date of publication and mention of the grant of the patent:
**14.06.2006 Bulletin 2006/24**

(51) Int Cl.:
*C08L 77/12* (2006.01) *C08L 21/00* (2006.01)

(21) Application number: **03291829.4**

(22) Date of filing: **24.07.2003**

(54) **Antistatic elastomer compositions**

Antistatische Elastomerzuammensetzungen

Compositions élastomères antistatiques

(84) Designated Contracting States:
**AT BE BG CH CY CZ DE DK EE ES FI FR GB GR HU IE IT LI LU MC NL PT RO SE SI SK TR**

(43) Date of publication of application:
**26.01.2005 Bulletin 2005/04**

(73) Proprietor: **Arkema**
**92800 Puteaux (FR)**

(72) Inventors:
- **Linemann, Annett**
**27300 Bernay (FR)**
- **Barriere, Benoît**
**27170 Le Tilleul Othon (FR)**
- **Briffaud, Thierry**
**27300 Bernay (FR)**

(74) Representative: **Neel, Henry**
**ARKEMA**
**Département Propriété Industrielle**
**4-8, cours Michelet,**
**La Défense 10**
**92091 Paris La Défense Cedex (FR)**

(56) References cited:
**EP-A- 0 251 791**
**EP-A- 0 574 913**
**EP-A- 1 046 675**
**EP-A- 1 145 870**
**US-A- 6 133 375**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 500 684 B1

## Description

### [*Field of the invention*]

The present invention relates to antistatic elastomer compositions and more precisely to a composition comprising an elastomer (A) and a copolymer (B) having polyamide blocks and polyether blocks comprising essentially ethylene oxide -($C_2H_4$-O)- units, the copolymer (B) having a melting point of between 60 and 150°C.

The aim is to give the elastomer (A) antistatic properties.

### [*Prior art and the technical problem*]

Patent Application **EP 1 046 675 A** discloses an antistatic polymer composition and more precisely a composition comprising a thermoplastic polymer (A) and a copolymer (B) having polyamide blocks and polyether blocks essentially comprising ethylene oxide -($C_2H_4$-O)- units, the copolymer (B) having a melting point of between 80 and 150°C. It is useful for polymers (A) that are heat-sensitive or are converted at low temperature. The polymers (A) that are cited are polyolefins, polyamides, fluoropolymers, saturated polyesters, polycarbonate, styrene resins, PMMA, thermoplastic polyurethanes (TPU), PVC, ethylene/vinyl acetate copolymers (EVA), ethylene/alkyl (meth)acrylate copolymers, ABS, SAN, polyacetal and polyketones. These are thermoplastics and not elastomers. The prior art has disclosed antistatic agents, such as ionic surfactants of the sulphonate or ethoxylated amine type, that may be added to elastomers. However, the antistatic properties of these elastomers depend on the ambient humidity and they are not permanent since these agents migrate to the surface of the elastomers and disappear. As antistatic agents, copolymers having polyamide blocks and hydrophilic polyether blocks are proposed - these agents have the advantage of not migrating and therefore of giving antistatic properties that are permanent and also independent of the ambient humidity.

The object of the present invention is to provide an elastomer (A) with permanent antistatic properties. The compositions of the invention are generally prepared by melt-blending (A) and (B) in single-screw or twin-screw extruders, Buss® mixers, kneaders or any equivalent device used in elastomers or thermoplastics technology. The blend of (A) and (B) may then either be cooled and recovered in the form of granules, rods or blocks, or moulded, injection-moulded or extruded directly in order to make various articles. The granules, rods or blocks may be melted subsequently in order to manufacture, as above, various articles by moulding, injection-moulding or extrusion. Advantageously, the above various articles are then crosslinked (vulcanized) by heating them to a temperature of, for example, around 150 to 200°C. The crosslinking agents may be introduced during the blending of (A) and (B) or may already be contained in (A). It is recommended that, when melt-blending (A) and (B) and crosslinking agents, no (or essentially no) crosslinking takes place. It has been found that it is particularly advantageous to use a copolymer (B) having a low melting point. The prior art does not disclose such systems.

### [*Brief description of the invention*]

The present invention relates to antistatic elastomer compositions and more precisely to a composition comprising an elastomer (A) and a copolymer (B) having polyamide blocks and polyether blocks comprising essentially ethylene oxide -($C_2H_4$-O)- units, the copolymer (B) having a melting point of between 60 and 150°C.

### [*Detailed description of the invention*]

**As regards the elastomer (A),** this may be natural or synthetic. The vulcanizable synthetic or natural elastomers that are suitable for carrying out the present invention are well known to those skilled in the art, in the definition of the present invention the term "elastomer" meaning that it may consist of blends of several elastomers.

These elastomers or blends of elastomers, once they have been vulcanized, have a compression set (CS) at 100°C of less than 50%, generally between 5% and 40% and preferably less than 30%. It is also possible to define elastomers as materials which, once they have been vulcanized, may be elongated to twice their initial length at room temperature, held in this manner for 5 minutes and return to within 10% of their initial length (see in particular Kirk-Othmer, "*Encyclopedia of Chemical Technology*", 3rd edition (1979), Vol. 8, page 626).

Among these elastomers, mention may be made of natural rubber, polyisoprene with a high content of cis double bonds, a polymerized emulsion based on styrene/butadiene copolymer, a polybutadiene with a high content of cis double bonds obtained by nickel, cobalt, titanium or neodymium catalysis, a halogenated ethylene/propylene/diene terpolymer, a halogenated butyl rubber, a styrene/butadiene block copolymer, a styrene/isopropene block copolymer, halogenated products of the above polymers, an acrylonitrile/butadiene copolymer, an acrylic elastomer, a fluoroelastomer, chloroprene and epichlorohydrin rubbers.

The elastomer may be functionalized. As regards functionalized elastomers, this function is advantageously a

carboxylic acid or carboxylic acid anhydride function. When the elastomers mentioned above comprise no carboxylic acid radicals or anhydride radicals deriving from the said acids (which is the case for most of them), the said radicals will be provided by grafting the abovementioned elastomers in a known manner or by blends of elastomers, for example with elastomers containing acrylic units such as acrylic acid. The aforementioned vulcanizable elastomers preferably have a weight content of carboxylic acid or dicarboxylic acid anhydride radicals of between 0.3% and 10% relative to the said elastomers.

Among the elastomers mentioned above that may be selected are those included in the following group: carboxylated nitrile elastomers, acrylic elastomers, carboxylated polybutadienes, ethylene/propylene/diene terpolymers, these being grafted, or blends of these polymers with the same elastomers but which are not grafted, such as nitrile rubbers, polybutadienes and ethylene/propylene/diene terpolymers, alone or as a blend.

The vulcanizing systems that are suitable for the present invention are well known to those skilled in the art and, consequently, the invention is not limited to one particular type of system.

When the elastomer is based on unsaturated monomer (butadiene, isoprene, vinylidene-norbornene, etc.), four types of vulcanizing system may be mentioned:

- sulphur systems consisting of sulphur combined with the usual accelerators such as metal salts of dithiocarbamates (zinc dimethyldithiocarbamate, tellurium dimethyldithiocarbamate, etc.), sulphenamides, etc.; these systems may also contain zinc oxide combined with stearic acid;
- sulphur donor systems in which most of the sulphur used for the bridges is derived from sulphur-containing molecules such as the organosulphur compounds mentioned above;
- phenolic resin systems consisting of difunctional phenol-formaldehyde resins which may be halogenated, combined with accelerators such as stannous chloride or zinc oxide;
- peroxide systems: any free-radical donor may be used (dicumyl peroxides, etc.) in combination with zinc oxide and stearic acid.

When the elastomer is acrylic (polybutyl acrylate with acid or epoxy functional groups or any other reactive functional group allowing crosslinking), the usual crosslinking agents based on diamines (orthotoluidyl guanidine, diphenylguanidine, etc.) or on blocked diamines (hexamethylenediamine carbamate, etc.) are used.

The elastomeric compositions may be modified for certain particular properties (for example improvement in the mechanical properties) by adding fillers such as carbon black, silica, kaolin, alumina, clay, talc, chalk, etc. These fillers may be surface-treated with silanes, polyethylene glycols or any other coupling molecule. In general, the content of fillers in parts by weight is between 5 and 100 per 100 parts of elastomers.

In addition, the compositions may be flexibilized with plasticizers such as mineral oils derived from petroleum, phthalic acid esters or sebacic acid esters, liquid polymeric plasticizers such as low-mass polybutadiene optionally carboxylated, and other plasticizers that are well known to those skilled in the art.

Examples of elastomers which may be present in the compositions of the invention are the following materials:

1. Polymers of diolefins, for example polybutadiene or polyisoprene.
2. Copolymers of mono- and diolefins with one another or with other vinyl monomers, e.g. propylene-isobutylene copolymers, propylene-butadiene copolymers, isobutylene-isoprene copolymers, ethylene-alkyl acrylate copolymers, ethylene-alkyl methacrylate copolymers, ethylene-vinyl acetate copolymers, acrylonitrile-butadiene copolymers, and also terpolymers of ethylene with propylene and with a diene, such as hexadiene, dicyclopentadiene or ethylidenenorbornene.
3. Copolymers of styrene or alpha-methylstyrene with dienes or with acrylic derivatives, e.g. styrene-butadiene, styrene-butadiene-alkyl acrylate and styrene-butadiene-alkyl methacrylate; block copolymers of styrene, e.g. styrene-butadiene-styrene, styrene-isoprene-styrene and styrene-ethylenebutylene-styrene, and also adhesives prepared from the latter three.
4. Halogen-containing polymers, e.g. polychloroprene, chlorinated rubber, chlorinated or brominated copolymer of isobutylene-isoprene (halobutyl rubber).
5. Natural rubber.
6. Mixtures (polyblends) of the afore-mentioned polymers with polyolefins, for example PP/EPDM, PP/SEBS.

The elastomers to be protected are preferably vulcanized elastomers. Of particular interest are natural rubber and synthetic rubber, and vulcanizates prepared therefrom. Preferred compositions of the invention comprise, as other additives, one or more components selected from the group consisting of pigments, dyes, fillers, levelling assistants, dispersants, plasticizers, vulcanization activators, vulcanization accelerators, vulcanizers, charge control agents, adhesion promoters, light stabilizers or antioxidants, such as phenolic antioxidants or aminic antioxidants, organic phosphites or phosphonites and/or thiosynergists.

**As regards the copolymer (B),** its relative solution viscosity is advantageously between 0.8 and 1.75 dl/g. This relative viscosity is measured as a 0.5% solution in metacresol using an Ostwald viscometer.

The copolymers (B) having polyamide blocks and polyether blocks result from the copolycondensation of polyamide blocks having reactive end groups with polyether blocks having reactive end groups, such as, *inter alia:*

1) polyamide blocks having diamine chain ends with polyoxyalkylene blocks having dicarboxylic chain ends;
2) polyamide blocks having dicarboxylic chain ends with polyoxyalkylene blocks having diamine chain ends obtained by cyanoethylation and hydrogenation of aliphatic dihydroxylated alpha,omega-polyoxyalkylene blocks called polyetherdiols;
3) polyamide blocks having dicarboxylic chain ends with polyetherdiols, the products obtained being, in this particular case, polyetheresteramides. The copolymers of the invention are advantageously of this type.

The polyamide blocks having dicarboxylic chain ends stem, for example, from the condensation of polyamide precursors in the presence of a chain-stopper dicarboxylic acid.

The polyamide blocks having diamine chain ends stem, for example, from the condensation of polyamide precursors in the presence of a chain-stopper diamine.

The polymers having polyamide blocks and polyether blocks may also include randomly distributed units. These polymers may be prepared by the simultaneous reaction of the polyether and of the polyamide-block precursors.

For example, it is possible to react polyetherdiol, polyamide precursors and a chain-stopper diacid. What is obtained is a polymer having essentially polyether blocks and polyamide blocks of very variable length, but also the various reactants that have reacted randomly, which are distributed randomly along the polymer chain.

It is also possible to react a polyetherdiamine, polyamide precursors and a chain-stopper diacid. What is obtained is a polymer having essentially polyether blocks and polyamide blocks of very variable length, but also the various reactants that have reacted randomly, which are distributed randomly along the polymer chain.

The polyamide blocks are obtained in the presence of a chain-stopper diacid or diamine, depending on whether it is desired to produce polyamides having acid end groups or polyamides having amine end groups. If the precursors already include a diacid or a diamine, it is sufficient for example to use it in excess.

As examples of aliphatic alpha,omega-aminocarboxylic acids, mention may be made of aminocaproic, 7-aminoheptanoic, 11-aminoundecanoic and 12-aminododecanoic acids.

As examples of lactams, mention may be made of caprolactam, oenantholactam and lauryllactam.

As examples of aliphatic diamines, mention may be made of hexamethylenediamine and $C_9$ to $C_{25}$ diamines (that is to say those having from 9 to 25 carbon atoms), such as dodecamethylenediamine and trimethylhexamethylenediamine.

As an example of cycloaliphatic diacids, mention may be made of 1,4-cyclohexyldicarboxylic acid.

The aliphatic diacids may be $C_9$ to $C_{25}$ acids (that is to say those having from 9 to 25 carbon atoms).

As examples of aliphatic diacids, mention may be made of butanedioic, adipic, azelaic, suberic, sebacic and dodecanedicarboxylic acids, dimerized fatty acids (these dimerized fatty acids preferably have a dimer content of at least 98%; preferably they are hydrogenated; they are sold under the brand name PRIPOL by Unichema or under the brand name EMPOL by Henkel) and $\alpha,\omega$-polyoxyalkylene diacids.

As examples of aromatic diacids, mention may be made of terephthalic acid (TA) and isophthalic acid (IA).

The cycloaliphatic diamines may be isomers of bis(4-aminocyclohexyl)methane (BACM), bis(3-methyl-4-aminocyclohexyl) methane (BMACM), 2,2-bis(3-methyl-4-aminocyclohexyl)propane (BMACP) and *para*-aminodicyclohexylmethane (PACM). Other diamines commonly used may be isophoronediamine (IPDA), 2,6-bis(aminomethyl)norbornane (BAMN) and piperazine.

Three types of polyamide blocks may advantageously be used.

**According to a first type,** the polyamide blocks result from the condensation of one or more alpha,omega-aminocarboxylic acids and/or of one or more lactams having from 6 to 12 carbon atoms, optionally in the presence of a dicarboxylic acid having, for example, from 4 to 12 carbon atoms, or of a diamine, and are of low mass, that is to say of $\overline{M}_n$ 400 to 1000 .

**According to a second type**, the polyamide blocks result from the condensation of at least one alpha,omega-aminocarboxylic acid (or a lactam), at least one diamine and at least one dicarboxylic acid. According to a variant of this second type, the polyamide blocks result from the condensation of at least two alpha,omega-aminocarboxylic acids or of at least two lactams having from 6 to 12 carbon atoms or of a lactam and of an aminocarboxylic acid not having the same number of carbon atoms, optionally in the presence of a chain stopper.

In the second type, the various constituents of the polyamide block and their proportion are chosen so as to obtain a melting point of between 60 and 150°C. Low-melting-point copolyamides are disclosed in Patents US 4 483 975, DE 3 730 504 and US 5 459 230. The same proportions of the constituents may also be used for the polyamide blocks.

**According to a third type**, the polyamide blocks result from the condensation of a diacid and a diamine. An

excess of the diacid or of the diamine is used, depending on whether blocks having acid end groups or amine end groups are desired.

**As regards the polyamide blocks of the first type**, these result for example from the condensation of one or more alpha,omega-aminocarboxylic acids and/or of one or more lactams having from 6 to 12 carbon atoms in the presence of a dicarboxylic acid having from 4 to 12 carbon atoms and have a low mass, that is to say $\overline{M}_n$ of 400 to 1000 and advantageously of 400 to 850. As examples of alpha,omega-aminocarboxylic acids, mention may be made of aminoundecanoic acid and aminododecanoic acid. As examples of dicarboxylic acids, mention may be made of adipic acid, sebacic acid, isophthalic acid, butanedioic acid, 1,4-cyclohexyldicarboxylic acid, terephthalic acid, the sodium or lithium salt of sulphoisophthalic acid, dimerized fatty acids (these dimerized fatty acids have a dimer content of at least 98% and are preferably hydrogenated) and dodecanedioic acid $HOOC\text{-}(CH_2)_{10}\text{-}COOH$.

As examples of lactams, mention may be made of caprolactam and lauryllactam.

Polyamide blocks, obtained by the condensation of lauryllactam in the presence of adipic acid or of dodecanedioic acid, have a mass $\overline{M}_n$ of 750 and a melting point of 127 - 130°C.

Advantageously, the polyamide blocks of the first type are formed from at least two lactams in proportions by weight that do not differ by more than 10 to 20%, advantageously do not differ by more than 5 to 10% and preferably are approximately equal. The expression "do not differ by more than 10%" is understood to mean that the content of one lactam may be 55% and the content of the other lactam is 45%. These polyamide blocks of the first type may also be formed from at least three lactams in proportions by weight that do not differ by more than 10 to 20%, advantageously do not differ by more than 5 to 10%, and preferably are approximately equal. It would not be outside the scope of the invention to replace one or more of the lactams with the corresponding amino acid. The condensation of at least two lactams or at least three lactams is carried out advantageously in the presence of a dicarboxylic acid as a chain stopper.

**As regards the polyamide blocks of the second type,** as examples of polyamide blocks of the second type the following may be mentioned:

a) 6,6/Pip.10/12
in which:

<u>6,6</u> denotes hexamethyleneadipamide (hexamethylenediamine condensed with adipic acid) units,
<u>Pip. 10</u> denotes units resulting from the condensation of piperazine with sebatic acid, and
<u>12</u> denotes units resulting from the condensation of lauryllactam.

The proportions by weight are respectively:

25 to 35/20 to 30/20 to 30, the total being 80, and advantageously 30 to 35/22 to 27/22 to 27, the total being 80. For example, the proportions 32/24/24 result in a melting point of 122 to 137°C;

b) 6,6/6,10/11/12
in which:

<u>6,6</u> denotes hexamethylenediamine condensed with adipic acid,
<u>6,10</u> denotes hexamethylenediamine condensed with sebacic acid,
<u>11</u> denotes units resulting from the condensation of aminoundecanoic acid, and
<u>12</u> denotes units resulting from the condensation of lauryllactam.

The proportions by weight are, respectively:

10 to 20/15 to 25/10 to 20/15 to 25, the total being 70, and advantageously 12 to 16/18 to 25/12 to 16/18 to 25, the total being 70. For example, the proportions 14/21/14/21 result in a melting point of 119 to 131°C.

**The polyether blocks** may represent from 5 to 85% by weight of the copolymer having polyamide and polyether blocks. The polyether blocks may contain units other than ethylene oxide units, such as, for example, propylene oxide or polytetrahydrofuran (which leads to polytetramethylene glycol chain linkages). It is also possible to use, simultaneously, PEG blocks, i.e. those consisting of ethylene oxide units, PPG blocks, i.e. those consisting of propylene oxide units, and PTMG blocks, i.e. those consisting of tetramethylene glycol units also called polytetrahydrofuran. Advantageously, PEG blocks or blocks obtained by the oxyethylation of bisphenols, such as bisphenol A for example, are used. The latter products are described in Patent EP 613,919.

The polyether blocks may also be formed from ethoxylated primary amines. It is also advantageous to use

these blocks. As examples of ethoxylated primary amines, mention may be made of the products of formula:

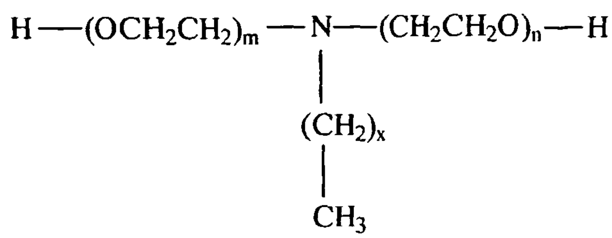

in which m and n are between 1 and 20 and x is between 8 and 18. These products are commercially available under the brand name NORAMOX® from CECA and under the brand name GENAMIIV® from Clariant.

The amount of polyether blocks in these copolymers having polyamide blocks and polyether blocks may be from 10 to 70%, advantageously from 35 to 60%, by weight of the copolymer. Preferably, if the polyamide blocks are of the first type, then the proportion by mass of the polyether blocks is between 40 and 60% for 60 to 40% of the polyamide blocks, respectively. Advantageously these proportions are approximately equal. The chain stopper for the polyamide block is included within the mass of the polyamide block.

The number-average molar mass $\overline{M}_n$ of the polyamide blocks is between 400 and 10 000 and preferably between 400 and 4000, except in the case of the blocks of the first type. The mass $\overline{M}_n$ of the polyether blocks is between 100 and 6000 and preferably between 200 and 3000.

The polyetherdiol blocks are either used as such and copolycondensed with polyamide blocks having carboxylic end groups, or they are aminated in order to be converted into polyetherdiamines and condensed with polyamide blocks having carboxylic end groups. They may also be blended with polyamide precursors and a diacid chain stopper in order to make polymers having polyamide blocks and polyether blocks with randomly distributed units.

As regards the proportions of (A) and (B), the amount of (B) depends on the level of antistatic behaviour required and on the proportion of polyether in (B). The proportions of (A) and (B) vary from 2 to 40 parts of (B) for 98 to 60 parts of (A); advantageously, 2 to 20 parts of (B) for 98 to 80 parts of (A) are used.

It would not be outside the scope of the invention if the melting point of the copolymer (B) were to be as low as 30 or 50°C; however, they are not easy to prepare, in particular it is difficult to recover them in granule form.

**As regards their preparation,** the copolymers (B) of the invention may be prepared by any means allowing the polyamide blocks and the polyether blocks to be linked together. In practice, essentially two processes are used, one being called a two-step process and the other a one-step process. In the two-step process, the polyamide blocks are firstly produced and then, in a second step, the polyamide blocks are linked to the polyether blocks. In the one-step process, the polyamide precursors, the chain stopper and the polyether are blended together; what is then obtained is a polymer having essentially polyether blocks and polyamide blocks of very variable length, but also the various reactants that have reacted randomly, which are distributed randomly along the polymer chain. It is advantageous to carry out the process, whether in one step or in two steps, in the presence of a catalyst. The catalysts disclosed in Patents US 4 331 786, US 4 115 475, US 4 195 015, US 4 839 441, US 4 864 014, US 4 230 838 and US 4 332 920 may be used. In the one-step process, polyamide blocks are also produced, which is why at the start of this paragraph it was stated that the copolymers of the invention could be prepared by any means of linking the polyamide blocks to the polyether blocks.

The preparation processes will now be described in detail, in which the polyamide blocks have carboxylic end groups and the polyether is a polyetherdiol.

The two-step process firstly consists in preparing the polyamide blocks having carboxylic end groups by the condensation of the polyamide precursors in the presence of a chain-stopper dicarboxylic acid and then, in a second step, in adding the polyether and a catalyst. If the polyamide precursors are only lactams or alpha,omega-aminocarboxylic acids, a dicarboxylic acid is added. If the precursors already comprise a dicarboxylic acid, this is used in excess with respect to the stoichiometry of the diamines. The reaction usually takes place between 180 and 300°C, preferably 200 to 290°C, and the pressure in the reactor is set between 5 and 30 bar and maintained for approximately 2 to 3 hours. The pressure in the reactor is slowly reduced to atmospheric pressure and then the excess water is distilled off, for example for one or two hours.

Once the polyamide having carboxylic acid end groups has been prepared, the polyether and a catalyst are then added. The polyether may be added in one or more goes, and the same applies to the catalyst. According to one advantageous embodiment, the polyether is added first and the reaction of the OH end groups of the polyether with the COOH end groups of the polyamide starts, with the formation of ester linkages and the elimination of water. The water is removed as much as possible from the reaction mixture by distillation and then the catalyst is introduced in order to

complete the linking of the polyamide blocks to the polyether blocks. This second step takes place with stirring, preferably under a vacuum of at least 6 mmHg (800 Pa) at a temperature such that the reactants and the copolymers obtained are in the molten state. By way of example, this temperature may be between 100 and 400°C and usually between 200 and 250°C. The reaction is monitored by measuring the torque exerted by the polymer melt on the stirrer or by measuring the electric power consumed by the stirrer. The end of the reaction is determined by the value of the torque or of the target power. The catalyst is defined as being any product which promotes the linking of the polyamide blocks to the polyether blocks by esterification. Advantageously, the catalyst is a derivative of a metal (M) chosen from the group formed by titanium, zirconium and hafnium.

As examples of derivatives, mention may be made of tetraalkoxides which satisfy the general formula $M(OR)_4$, in which M represents titanium, zirconium or hafnium and the Rs, which are identical or different, denote linear or branched alkyl radicals having from 1 to 24 carbon atoms.

The $C_1$ to $C_{24}$ alkyl radicals from which the radicals R of the tetraalkoxides used as catalysts in the process according to the invention are chosen are, for example, such as methyl, ethyl, propyl, isopropyl, butyl, ethylhexyl, decyl, dodecyl and hexadodecyl. The preferred catalysts are tetraalkoxides for which the radicals R, which are identical or different, are $C_1$ to $C_8$ alkyl radicals. Examples of such catalysts are especially $Z_r(OC_2H_5)_4$, $Z_r(O\text{-iso}C_3H_7)_4$, $Z_r(OC_4H_9)_4$, $Z_r(OC_5H_{11})_4$, $Z_r(OC_6H_{13})_4$, $H_f(OC_2H_5)_4$, $H_f(OC_4H_9)_4$ and $H_f(O\text{-iso}C_3H_7)_4$.

The catalyst used in this process according to the invention may consist only of one or of several of the tetraalkoxides of formula $M(OR)_4$ defined above. It may also be formed by the combination of one or more of these tetraalkoxides with one or more alkali or alkaline-earth metal alcoholates of formula $(R_1O)_pY$ in which $R_1$ denotes a hydrocarbon residue, advantageously a $C_1$ to $C_{24}$ alkyl residue and preferably a $C_1$ to $C_8$ alkyl residue, Y represents an alkali or alkaline-earth metal and p is the valency of Y. The amounts of alkali or alkaline-earth metal alcoholate and of zirconium or hafnium tetraalkoxides which are combined to form the mixed catalyst may vary within wide limits. However, it is preferred to use amounts of alcoholate and of tetraalkoxides such that the molar proportion of alcoholate is approximately equal to the molar proportion of tetraalkoxide.

The weight proportion of catalyst, that is to say of the tetraalkoxide(s), when the catalyst does not contain an alkali or alkaline-earth metal alcoholate, or else of all of the tetraalkoxide(s) and of the alkali or alkaline-earth metal alcoholate(s) when the catalyst is formed by the combination of these two types of compounds, advantageously varies from 0.01 to 5% of the weight of the mixture of the dicarboxylic polyamide with the polyoxyalkylene glycol, and preferably lies between 0.05 and 2% of this weight.

By way of example of other derivatives, mention may also be made of the salts of the metal (M), particularly the salts of (M) and of an organic acid and the complex salts between the oxide of (M) and/or the hydroxide of (M) and an organic acid. Advantageously, the organic acid may be formic acid, acetic acid, propionic acid, butyric acid, valeric acid, caproic acid, caprylic acid, lauric acid, myristic acid, palmitic acid, stearic acid, oleic acid, linoleic acid, linolenic acid, cyclohexanecarboxylic acid, phenylacetic acid, benzoic acid, salicylic acid, oxalic acid, malonic acid, succinic acid, glutaric acid, adipic acid, maleic acid, fumaric acid, phthalic acid and crotonic acid. Acetic and propionic acids are particularly preferred. Advantageously M is zirconium. These salts may be called zirconyl salts. The Applicant believes that these salts of zirconium and of an organic acid or the complex salts mentioned above release $ZrO^{++}$ during the process, without being bound by this explanation. The product used is the one sold under the name zirconyl acetate. The amount to be used is the same as for the $M(OR)_4$ derivatives.

This process and these catalysts are described in Patents US 4,332,920, US 4,230,838, US 4,331,786, US 4,252,920, JP 07145368A, JP 06287547A and EP 613919.

With regard to the one-step process, all the reactants used in the two-step process, that is to say the polyamide precursors, the chain-stopper dicarboxylic acid, the polyether and the catalyst, are mixed together. They are the same reactants and the same catalyst as in the two-step process described above. If the polyamide precursors are only lactams, it is advantageous to add a little water.

The copolymer has essentially the same polyether blocks and the same polyamide blocks, but also a small portion of the various reactants that have reacted randomly, which are distributed randomly along the polymer chain.

As in the first step of the two-step process described above, the reactor is closed and heated, with stirring. The pressure established is between 5 and 30 bar. When the pressure no longer changes, the reactor is put under reduced pressure while still maintaining vigorous stirring of the molten reactants. The reaction is monitored as previously in the case of the two-step process.

The catalyst used in the one-step process is preferably a salt of the metal (M) and of an organic acid or a complex salt between the oxide and/or the hydroxide of (M) and an organic acid.

The preparation processes will now be described in detail in which the polyamide blocks have carboxylic end groups and the polyether is a polyetherdiamine.

The two-step process firstly consists in preparing the polyamide blocks having carboxylic end groups by the condensation of the polyamide precursors in the presence of a chain-stopper dicarboxylic acid and then, in a second step, in adding the polyether and, optionally, a catalyst. If the polyamide precursors are only lactams or alpha,omega-aminocarboxylic acids, a dicarboxylic acid is added. If the precursors already comprise a dicarboxylic acid, this is used in excess with respect to the stoichiometry of the diamines. The reaction usually takes place between 180 and 300°C, preferably 200 to 290°C, and the pressure in the reactor is set between 5 and 30 bar and maintained for approximately 2 to 3 hours. The pressure in the reactor is slowly reduced to atmospheric pressure and then the excess water is distilled off, for example for one or two hours.

Once the polyamide having carboxylic acid end groups has been prepared, the polyether and optionally a catalyst are then added. The polyether may be added in one or more goes, and the same applies to the catalyst. According to one advantageous embodiment, the polyether is added first and the reaction of the $NH_2$ end groups of the polyether with the COOH end groups of the polyamide starts, with the formation of ester linkages and the elimination of water. The water is removed as much as possible from the reaction mixture by distillation and then the optional catalyst is introduced in order to complete the linking of the polyamide blocks to the polyether blocks. This second step takes place with stirring, preferably under a vacuum of at least 6 mmHg (800 Pa) at a temperature such that the reactants and the copolymers obtained are in the molten state. By way of example, this temperature may be between 100 and 400°C and usually between 200 and 250°C. The reaction is monitored by measuring the torque exerted by the polymer melt on the stirrer or by measuring the electric power consumed by the stirrer. The end of the reaction is determined by the value of the torque or of the target power. The catalyst is defined as being any product which promotes the linking of the polyamide blocks to the polyether blocks. A person skilled in the art will prefer protic catalysis.

With regard to the one-step process, all the reactants used in the two-step process, that is to say the polyamide precursors, the chain-stopper dicarboxylic acid, the polyether and the catalyst, are mixed together. They are the same reactants and the same catalyst as in the two-step process described above. If the polyamide precursors are only lactams, it is advantageous to add a little water.

The copolymer has essentially the same polyether blocks and the same polyamide blocks, but also a small portion of the various reactants that have reacted randomly, which are distributed randomly along the polymer chain.

As in the first step of the two-step process described above, the reactor is closed and heated, with stirring. The pressure established is between 5 and 30 bar. When the pressure no longer changes, the reactor is put under reduced pressure while still maintaining vigorous stirring of the molten reactants. The reaction is monitored as previously in the case of the two-step process.

The compositions according to the invention may furthermore contain at least one additive chosen from:

- fillers (minerals, fire retardants, etc.);
- fibres;
- inorganic and/or organic and/or polyelectrolyte salts;
- dyes;
- pigments;
- brighteners;
- antioxidants;
- UV stabilizers.

<u>Example 1</u>

Preparation of the 6,6/6,10/12/PEG.6 copolymer in the proportions 14/14/42/30. "PEG.6" means that the polyether was PEG and that the chain stopper was adipic acid. The proportion of chain stopper was 5 to 20 mol per 100 mol of the polyether/chain stopper combination.

The following monomers were introduced into an autoclave fitted with a stirrer: 16 800 g of lauryllactam, 3557 g of sebacic acid (C10), 5408 g of adipic acid and 6188 g of hexamethylenediamine (in the form of a 73.1% solution in water).

The mixture thus formed was put in an inert atmosphere and heated until the temperature reached 290°C, vigorous stirring being continued as soon as the reactants melted. The mixture was maintained at 290°C and at 25 bar pressure for 2 hours (precondensation). Next, the pressure was slowly reduced (over 1.25 h) from 25 bar to atmospheric pressure and the temperature was reduced from 290 to 245°C. A fine dispersion consisting of 9711 g of dihydroxylated polyoxyethylene (Mn = 600) and 70 g of a solution of zirconyl acetate in water/acetic acid (0.625% total charge of the zirconyl acetate; $pH_{solution}$ = 3.0 - 3.5) was then introduced.

The mixture obtained was put under a reduced pressure of 30 mbar. The reaction was continued for a period of 3 hours. The product was extruded into a water bath and granulated. The product obtained had an inherent viscosity of 1.12 dl/g and melting point (determined optically) of 120 - 130°C.

**Example 2**

A copolymer (B) having polyamide blocks and PEG (polyethylene glycol) blocks of 6/11/12/PEG600.10 formula was prepared. It was obtained by the condensation of caprolactam, aminoundecanoic acid and lauryllactam in the presence of sebacic acid as chain stopper.

The proportions by mass were 16/14/16/54 respectively, that is to say there were 16 parts of caprolactam, 14 parts of aminoundecanoic acid, 16 parts of lauryllactam and 54 parts of an equimolar PEG 600/sebacic acid mixture.

The 6/11/12/PEG600.10 composition in proportions of 16/14/16/54 corresponds to a 6/11/12 coPA block in proportions of 35/30/35 with a repeat unit of 643.4 g/mol. This unit was equimolarly combined with -1 mol of ChS (chain stopper) - sebacic acid. The CoPA block therefore finally had a length of 845.6 g/mol before reaction with the PEG600.

During the esterification, 2 mol of water (36 g/mol) were removed, therefore resulting in 809 g/mol/600 g/mol = 57.4%/42.6%. This product showed a very low melting point of $T_m$ = 74.2°C, although it still had a not insignificant degree of crystallinity (proportional to the recrystallization enthalpy $\Delta H_c$ = 18.6 J/g) observed in DSC. The final product therefore contained 42.6% PEG.

The granules of the polymer described in Example 2 were compression-moulded in the form of a plaque approximately 10 x 10 cm in size and approximately 2 mm in thickness. This plaque was conditioned for two weeks at 50% relative humidity ±3% and at 23°C ±1°C. The surface resistance $R_S$ (in Ω/□) and the volume resistance $R_V$ (in Ω.cm) were then measured according to the CEI 93 standard using two concentric electrodes, one a circular electrode 50 mm in diameter and the other an annular electrode of 60 mm inside diameter, separated by a distance of 5 mm. For the $R_S$ measurement, the voltage applied was 500 V, while for the $R_V$ measurement the voltage applied was 100 V. The average of 5 measurements on 5 different plaques gave an average surface resistance $R_S$ of $5 \times 10^9$ Ω/□ and an average volume resistance $R_V$ of $2 \times 10^9$ Ω.cm. The resistance of the polymer described in Example 2 therefore clearly lies within the antistatic range.

**Claims**

1. Antistatic elastomer compositions comprising an elastomer (A) and a copolymer (B) having polyamide blocks and polyether blocks comprising essentially ethylene oxide -($C_2H_4$-O)- units, the copolymer (B) having a melting point of between 60 and 150°C.

2. Compositions according to Claim 1, in which the polyamide blocks result from the condensation of one or more alpha,omega-aminocarboxylic acids and/or of one or more lactams having from 6 to 12 carbon atoms, optionally in the presence of a dicarboxylic acid or of a diamine, and have a mass $\bar{M}_n$ of 400 to 1000.

3. Compositions according to Claim 2, in which the polyamide blocks are formed from at least two lactams in proportions by weight that do not differ by more than 10 to 20%.

4. Compositions according to Claim 3, in which the polyamide blocks are formed from at least two lactams in proportions by weight that do not differ by more than 5 to 10%.

5. Compositions according to Claim 2, in which the polyamide blocks are formed from at least three lactams in proportions by weight that do not differ by more than 10 to 20%.

6. Compositions according to Claim 5, in which the polyamide blocks are formed from at least three lactams in proportions by weight that do not differ by more than 5 to 10%.

7. Compositions according to Claim 1, in which the polyamide blocks of the copolymer (B) are copolyamides resulting from the condensation of at least one alpha,omega-aminocarboxylic acid (or a lactam), at least one diamine and at least one dicarboxylic acid.

8. Compositions according to Claim 1, in which the polyamide blocks result from the condensation of at least two alpha, omega-aminocarboxylic acids or of at least two lactams having from 6 to 12 carbon atoms or of a lactam and of an aminocarboxylic acid not having the same number of carbon atoms, optionally in the presence of a chain stopper.

9. Compositions according to any one of the preceding claims, in which the polyether blocks represent 5 to 85% of (B) by weight.

**10.** Compositions according to Claim 9, in which the proportion of polyether blocks in these copolymers having polyamide blocks and polyether blocks is from 10 to 70% by weight of the copolymer.

**11.** Compositions according to Claim 10, in which the proportion of polyether blocks in these copolymers having polyamide blocks and polyether blocks is from 35 to 60% by weight of the copolymer.

**12.** Compositions according to any one of Claims 1 to 6, in which the proportion by mass of the polyether blocks is between 40 and 60% for 60 to 40% of the polyamide blocks, respectively.

**13.** Compositions according to any one of the preceding claims, in which the proportions of (A) and (B) vary from 2 to 40 parts of (B) for 98 to 60 parts of (A).

**14.** Compositions according to Claim 13, in which the proportions of (A) and (B) vary from 2 to 20 parts of (B) for 98 to 80 parts of (A).

**Patentansprüche**

**1.** Antistatische Elastomerzusammensetzungen, enthaltend ein Elastomer (A) und ein Copolymer (B) mit Polyamidblöcken und Polyetherblöcken, die im wesentlichen Ethylenoxid-Einheiten -($C_2H_4$-O-)-enthalten, wobei das Copolymer (B) einen Schmelzpunkt zwischen 60 und 150˚C aufweist.

**2.** Zusammensetzungen nach Anspruch 1, worin sich die Polyamidblöcke aus der Kondensation einer oder mehrerer alpha,omega-Aminocarbonsäuren und/oder eines oder mehrerer Lactame mit 6 bis 12 Kohlenstoffatomen, gegebenenfalls in Gegenwart einer Dicarbonsäure oder eines Diamins, ergeben und eine Masse $\overline{M}_n$ von 400 bis 1000 aufweisen.

**3.** Zusammensetzungen nach Anspruch 2, worin die Polyamidblöcke aus mindestens zwei Lactamen in Gewichtsanteilen, die sich nicht um mehr als 10 bis 20% unterscheiden, gebildet sind.

**4.** Zusammensetzungen nach Anspruch 3, worin die Polyamidblöcke aus mindestens zwei Lactamen in Gewichtsanteilen, die sich nicht um mehr als 5 bis 10% unterscheiden, gebildet sind.

**5.** Zusammensetzungen nach Anspruch 2, worin die Polyamidblöcke aus mindestens drei Lactamen in Gewichtsanteilen, die sich nicht um mehr als 10 bis 20% unterscheiden, gebildet sind.

**6.** Zusammensetzungen nach Anspruch 5, worin die Polyamidblöcke aus mindestens drei Lactamen in Gewichtsanteilen, die sich nicht um mehr als 5 bis 10% unterscheiden, gebildet sind.

**7.** Zusammensetzungen nach Anspruch 1, worin die Polyamidblöcke des Copolymers (B) Copolyamide sind, die sich aus der Kondensation mindestens einer alpha,omega-Aminocarbonsäure (oder eines Lactams), mindestens eines Diamins und mindestens einer Dicarbonsäure ergeben.

**8.** Zusammensetzungen nach Anspruch 1, worin sich die Polyamidblöcke aus der Kondensation von mindestens zwei alpha,omega-Aminocarbonsäuren oder mindestens zwei Lactamen mit 6 bis 12 Kohlenstoffatomen oder einem Lactam und einer Aminocarbonsäure, die nicht die gleiche Zahl von Kohlenstoffatomen aufweist, gegebenenfalls in Gegenwart eines Kettenabbruchmittels, ergeben.

**9.** Zusammensetzungen nach einem der vorhergehenden Ansprüche, worin die Polyetherblöcke 5 bis 85 Gew.-% von (B) ausmachen.

**10.** Zusammensetzungen nach Anspruch 9, worin der Anteil der Polyetherblöcke in diesen Copolymeren mit Polyamidblöcken und Polyetherblöcken 10 bis 70 Gew.-%, bezogen auf das Copolymer, beträgt.

**11.** Zusammensetzungen nach Anspruch 10, worin der Anteil der Polyetherblöcke in diesen Copolymeren mit Polyamidblöcken und Polyetherblöcken 35 bis 60 Gew.-%, bezogen auf das Copolymer, beträgt.

**12.** Zusammensetzungen nach einem der Ansprüche 1 bis 6, worin der Massenanteil der Polyetherblöcke zwischen

40 und 60% auf respektive 60 bis 40% der Polyamidblöcke beträgt.

**13.** Zusammensetzungen nach einem der vorhergehenden Ansprüche, worin die Anteile von (A) und (B) von 2 bis 40 Teilen (B) auf 98 bis 60 Teile (A) variieren.

**14.** Zusammensetzungen nach Anspruch 13, worin die Anteile von (A) und (B) von 2 bis 20 Teilen (B) auf 98 bis 80 Teile (A) variieren.

## Revendications

**1.** Compositions d'élastomères antistatiques comprenant un élastomère (A) et un copolymère (B) à blocs polyamide et blocs polyéther comprenant essentiellement des motifs oxyde d'éthylène -($C_2H_4$-O)-le copolymère (B) ayant une température de fusion comprise entre 60 et 150°C.

**2.** Compositions selon la revendication 1 dans lesquelles les séquences (ou blocs) polyamide résultent de la condensation d'un ou plusieurs acides alpha oméga aminocarboxyliques et/ou d'un ou plusieurs lactames ayant de 6 à 12 atomes de carbone en présence éventuelle d'un diacide carboxylique ou d'une diamine et ont une masse $\overline{Mn}$ de 400 à 1000.

**3.** Compositions selon la revendication 2 dans lesquelles les blocs polyamide sont constitués d'au moins deux lactames en proportions en poids qui ne sont pas différentes de plus de 10 à 20%.

**4.** Compositions selon la revendication 3 dans lesquelles les blocs polyamide sont constitués d'au moins deux lactames en proportions en poids qui ne sont pas différentes de plus de 5 à 10%.

**5.** Compositions selon la revendication 2 dans lesquelles les blocs polyamide sont constitués d'au moins trois lactames en proportions en poids qui ne sont pas différentes de plus de 10 à 20%.

**6.** Compositions selon la revendication 5 dans lesquelles les blocs polyamide sont constitués d'au moins trois lactames en proportions en poids qui ne sont pas différentes de plus de 5 à 10%.

**7.** Compositions selon la revendication 1 dans lesquelles les blocs polyamide du copolymère (B) sont des copolyamides résultant de la condensation d'au moins un acide alpha oméga aminocarboxylique (ou un lactame), au moins une diamine et au moins un acide dicarboxylique.

**8.** Compositions selon la revendication 1 dans lesquelles les blocs polyamide résultent de la condensation d'au moins deux acides alpha oméga aminocarboxyliques ou d'au moins deux lactames ayant de 6 à 12 atomes de carbone ou d'un lactame et d'un acide aminocarboxylique n'ayant pas le même nombre d'atomes de carbone en présence éventuelle d'un limiteur de chaîne.

**9.** Compositions selon l'une quelconque des revendications précédentes dans lesquelles les blocs polyéther représentent en poids 5 à 85 % de (B).

**10.** Compositions selon la revendication 9 dans lesquelles la proportion de blocs polyéther dans ces copolymères à blocs polyamide et blocs polyéther est de 10 à 70% en poids du copolymère.

**11.** Compositions selon la revendication 10 dans lesquelles la proportion de blocs polyéther dans ces copolymères à blocs polyamide et blocs polyéther est de 35 à 60% en poids du copolymère.

**12.** Compositions selon l'une quelconque des revendications 1 à 6 dans lesquelles la proportion massique des blocs polyéther est comprise entre 40 et 60% pour respectivement 60 à 40% des blocs polyamide.

**13.** Compositions selon l'une quelconque des revendications précédentes dans lesquelles la proportion de (A) et (B) varie de 2 à 40 parties de (B) pour 98 à 60 parties de (A).

**14.** Compositions selon la revendication 13 dans lesquelles la proportion de (A) et (B) varie de 2 à 20 parties de (B)

pour 98 à 80 parties de (A).